# FASCICULE DE BREVET EUROPEEN

(11) **EP 0 881 104 B1**
(45) Date de publication et mention de la délivrance du brevet: **30.01.2002**
(21) Numéro de dépôt: 98109265.3
(22) Date de dépôt: 22.05.1998
(51) Int. Cl.: B60C 15/05, B60C 15/024

(54) **Enveloppe de pneumatiques dont chaque bourrelet comporte deux tringles**
Reifen mit zwei Wulstkernen per Wulst
Tyre with bead comprising two cores

(30) Priorité: 30.05.1997 FR 9706763
(43) Date de publication de la demande: 02.12.1998
(73) Titulaire: Compagnie Générale des Etablissements MICHELIN-MICHELIN & CIE, 63040 Clermont-Ferrand Cedex 09 (FR)
(72) Inventeur: Ahouanto, Michel, 63530 Enval (FR)
(74) Mandataire: Devaux, Edmond-Yves

(56) Documents cités:
- EP-A- 0 167 283
- EP-A- 0 168 754
- EP-A- 0 634 297
- EP-A- 0 770 504
- FR-A- 2 678 544
- PATENT ABSTRACTS OF JAPAN vol. 016, no. 034 (M-1204), 28 janvier 1992 & JP 03 243404 A (YOKOHAMA RUBBER CO LTD:THE), 30 octobre 1991

## Description

La présente invention concerne les enveloppes de pneumatiques. L'invention concerne en particulier les enveloppes de pneumatiques dont chaque bourrelet comporte deux tringles.

Il est connu de munir les enveloppes de pneumatiques de deux tringles dans le but d'éviter la rotation sur jante de l'enveloppe ou pour prévenir un décoincement du bourrelet de l'enveloppe lors d'une perte de pression. De telles réalisations sont décrites par exemple dans EP-A-168754 et dans JP-A-5 178 033.

L'enveloppe conforme à EP-A-168754 qui comporte les caractéristiques du préambule de la revendication 1, est destinée à être montée sur une jante dont au moins un siège de bourrelet se prolonge axialement vers l'intérieur par une saillie de retenue axiale (appelée hump). Le bourrelet de cette enveloppe comporte deux tringles dont l'une est proche de la pointe du bourrelet, vers l'intérieur de l'enveloppe, et l'autre assure un blocage de la première en cas de fortes sollicitations axiales. De préférence les deux tringles sont solidarisées par une nappe carcasse pour améliorer cette collaboration. La résistance au décoincement est donc due essentiellement à l'action de la seconde tringle sur la première et l'action d'antidécoincement n'est pas toujours suffisante.

JP-A-5 178 033 décrit une tringle secondaire appliquée contre la jante, sous une tringle principale ou à côté de cette tringle principale, pour améliorer l'uniformité radiale en évitant les défauts d'excentricité. Cette demande n'est pas concernée par les problèmes de décoincement.

Le but de l'invention est de proposer une enveloppe de pneumatique utilisable sur une jante avec hump, cette enveloppe permettant le maintien en place du bourrelet sur le siège de jante dans des conditions extrêmes de roulage à basse pression ou à pression nulle, en ligne droite ou en forte dérive, cette enveloppe permettant également d'éviter ou de réduire fortement la rotation du bourrelet sur la jante dans le cas de passage de couple de forte puissance.

L'enveloppe de pneumatique conforme à l'invention, utilisable sur jante avec hump, comportant un sommet, deux flancs et deux bourrelets, avec au moins une nappe carcasse s'étendant d'un bourrelet à l'autre, est caractérisée en ce que chaque bourrelet présente les points suivants :
a) il comporte une tringle principale autour de laquelle s'enroule la nappe carcasse et une tringle secondaire disposée en-dehors de la nappe carcasse ;
b) le diamètre intérieur de la tringle principale après montage sur la jante est supérieur au diamètre du sommet du hump ; le diamètre intérieur de la tringle principale avant montage sur la jante est pratiquement le même qu'après montage sur la jante et l'allongement élastique maximal de la tringle principale est au plus égal à 1.5 % ;
c) avant montage sur la jante, le diamètre extérieur de la tringle secondaire est inférieur au diamètre intérieur de la tringle principale ; après montage sur la jante, le diamètre intérieur de la tringle secondaire est inférieur au diamètre du sommet du hump ; le diamètre intérieur de la tringle secondaire après montage sur la jante est supérieur de 1,5 à 3 % au diamètre intérieur de la tringle secondaire avant montage sur la jante et l'allongement élastique maximal de la tringle secondaire est d'au moins 3 %.

L'invention sera mieux comprise à l'aide des exemples qui suivent et des figures relatives à ces exemples.

Sur le dessin :
- la figure 1 représente en coupe radiale une enveloppe de pneumatique conforme à l'invention avec deux bourrelets ;
- la figure 2 représente en coupe radiale, plus en détail, un bourrelet de l'enveloppe de la figure 1.
- la figure 3 représente en coupe radiale un bourrelet d'une autre enveloppe conforme à l'invention.

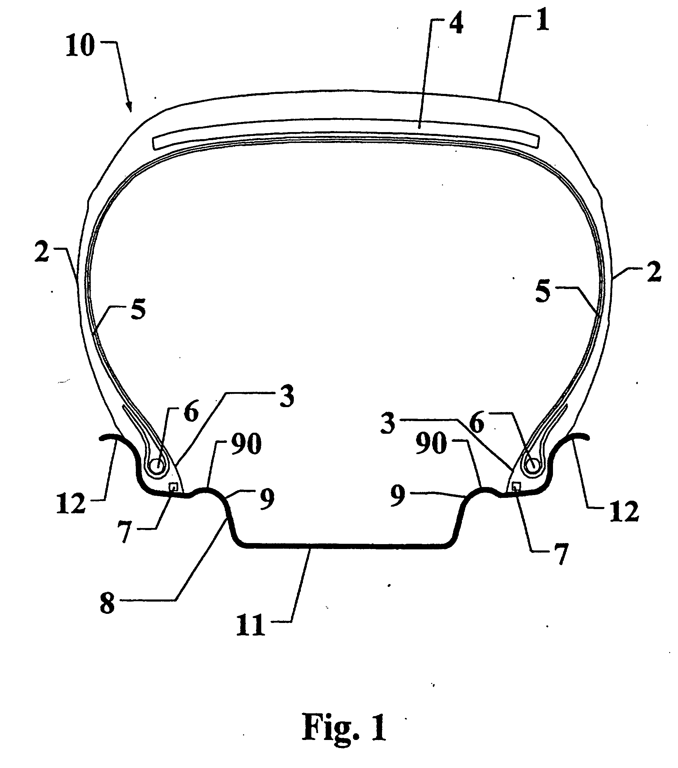

On voit sur la figure 1 une enveloppe 10 de pneumatique conforme à l'invention. Cette enveloppe 10 comporte un sommet 1, deux flancs 2, et deux bourrelets 3. Le sommet 1 est renforcé par une armature de sommet 4 connue, constituée par exemple de deux nappes croisées non représentées sur le dessin dans un but de simplification. Une nappe carcasse 5 passe d'un bourrelet 3 à l'autre en s'enroulant, dans chaque bourrelet, autour d'une tringle principale 6. Chaque bourrelet 3 comporte en outre une tringle secondaire 7 disposée dans la partie inférieure de ce bourrelet. L'enveloppe est représentée disposée sur une jante 8 comportant deux humps 9, chaque bourrelet 3 étant au contact ou à proximité d'un hump 9. La jante 8 comporte d'autre part une gorge 11 et deux crochets de jante 12.

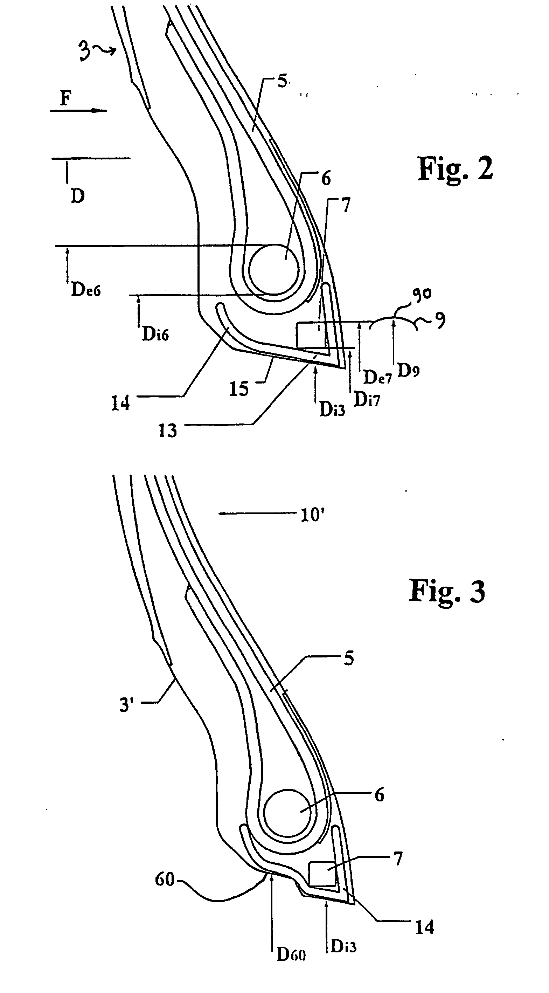

La figure 2 représente plus en détail un bourrelet 3 de l'enveloppe 10. Ce bourrelet est supposé monté sur la jante 8 qui n'est pas représentée sur le dessin dans un but de simplification. Sur cette figure 2, D₉ représente le diamètre du sommet 90 du hump 9 au contact ou à proximité du bourrelet 3, Dₑ₆ représente le diamètre extérieur de la tringle principale 6, Dᵢ₆ représente le diamètre intérieur de cette tringle 6, Dₑ₇ représente le diamètre extérieur de la tringle secondaire 7 et Dᵢ₇ représente le diamètre intérieur de cette tringle 7.

Chacun de ces diamètres est le diamètre d'un cercle ayant pour axe l'axe de révolution de l'enveloppe 10, et donc de la jante 8, cet axe, non représenté sur le dessin dans un but de simplification, étant parallèle à la droite D de la figure 2.

Conformément à l'invention, on a les relations suivantes
- avant montage sur la jante Dᵢ₆ > Dₑ₇
- après montage sur la jante Dᵢ₆ > D₉, Dᵢ₇ < D₉.

D'autre part Dᵢ₆, et donc Dₑ₆, après montage sur la jante 8, sont pratiquement identiques aux diamètres correspondants de la tringle principale 6 avant son montage sur la jante 8, c'est-à-dire que cette tringle ne subit pratiquement aucun allongement lors du montage de l'enveloppe 10 sur la jante 8. Par contre le diamètre Dᵢ₇ de la tringle secondaire 7 monté sur la jante 8 est supérieur de 1,5 à 3 % à ce diamètre avant le montage de l'enveloppe 10 sur la jante 8, c'est-à-dire que la tringle 7 est soumise à une contrainte de traction après ce montage. Il en est de même pour toute la partie du bourrelet qui entoure cette tringle, c'est-à-dire que le diamètre Dᵢ₃ mesuré selon l'axe de rotation de l'enveloppe, dans le plan perpendiculaire à cet axe et contenant l'axe de la tringle 7 est supérieur de 1,5 à % à ce diamètre avant montage sur la jante 8. En d'autre termes les valeurs de Dᵢ₇ et de Dᵢ₃ après montage sur la jante 8 sont égales à 1,015-1,030 fois les valeurs respectives de ces diamètres avant le montage. L'allongement élastique maximal de la tringle principale 6 est au plus égal à 1,5 %, c'est-à-dire que cette tringle est très rigide. Par contre la tringle secondaire 7 a un allongement élastique maximal au moins égal à 3 %, c'est-à-dire qu'elle est relativement souple et qu'elle peut encore s'allonger après montage sur la jante 8.

L'invention présente les avantages suivants
- la tringle principale 6, rigide, permet un accrochage très efficace de la nappe carcasse 5 dans le bourrelet 3, et donc une bonne rigidité de ce bourrelet. La tringle secondaire 7 , soumise aux contraintes de traction lorsque l'enveloppe 10 est montée sur la jante 8, permet une compression efficace de la gomme 13 qui l'entoure contre la jante 8 et donc une bonne étanchéité. D'autre part, lorsque des contraintes sont appliquées sur le bourrelet en direction de l'intérieur de l'enveloppe, ces contraintes, représentées par la flèche F sur la figure 2, étant par exemple dues à une perte de pression et/ou à des forces de dérive ou de déport importantes, la tringle 7, déjà soumise à des forces de traction s'oppose au franchissement du hump 9 et donc garantit une bonne résistance au décoincement, c'est-à-dire que le bourrelet 3 ne franchit pas le hump 9 pour pénétrer dans la gorge 11. En effet, si le bourrelet 3 franchissait le hump 9 et pénétrait dans la gorge 11 de la jante 8, il se produirait un décoincement et la partie diamétralement opposée de ce bourrelet aurait alors la possibilité de passer par-dessus le crochet de jante 12 ce qui provoquerait un déjantage.

D'un autre côté, la relative souplesse de la tringle secondaire 7 permet d'augmenter son diamètre intérieur Dᵢ₇ avec un outil de démontage pour monter l'enveloppe 10 sur la jante 8, ou pour l'enlever de cette jante lors d'un démontage. Il peut être approprié dans ce but de prévoir une languette de protection 14 entre la tringle secondaire 7 et la face inférieure 15 du bourrelet 3, pour éviter que l'outil de démontage n'endommage le bourrelet 3. Cette languette est par exemple constituée d'une nappe renforcée avec des fils métalliques ou textiles et elle peut éventuellement se prolonger vers le haut du côté intérieur du bourrelet pour augmenter la protection, comme montré sur la figure 2. La languette 14 n'est pas représentée à la figure 1 dans un but de simplification.

La tringle principale 6 est par exemple constituée de renforts métalliques, notamment des fils ou des profilés, cette tringle pouvant être par exemple une tringle classique du type "tringle tressée" ou du type "tringle paquet". On peut cependant utiliser aussi des renforts non métalliques de grande ténacité.

La tringle secondaire 7, relativement flexible est de préférence réalisée avec des renforts non métalliques, par exemple des fils en carbone ou en matière polymère organique de grande ténacité, notamment l'aramide. De préférence le module en traction de la tringle secondaire 7 est au moins égal à 10 000 MPa (mégapascals) pour garantir une bonne résistance au décoincement.

De préférence, l'allongement élastique maximal de la tringle secondaire 7 est au moins égal à 4 %.

Le terme "fil" doit être pris dans un sens très général, un fil pouvant être constitué par un fil unique monofilamentaire ou multifilamentaire ou par un ensemble de tels fils tordus entre eux formant notamment des câbles ou des retors.

### Exemple de réalisation

On réalise une enveloppe radiale conforme à l'invention de dimension 175-70R13.

Les caractéristiques de cette enveloppe et de la jante sur laquelle elle est montée sont les suivantes.
- Tringle principale 6
   C'est une tringle tressée en acier dont la résistance à la rupture est de 2 tonnes. Son allongement élastique maximal est de 1,4 %. Le diamètre Dᵢ₆ avant et après montage sur la jante 8 est respectivement de 333,6 mm et 334.9 mm.
   L'augmentation du diamètre Dᵢ₆ après montage sur la jante 8 est de 0,4 %, c'est-à-dire qu'il est faible.
- Tringle secondaire 7
   Cette tringle est obtenue en enroulant 11 spires d'un fil de renfort aramide. Le module en traction de la tringle 7 ainsi obtenu est de 20 000 MPa. Le diamètre Dₑ₇ et le diamètre Dᵢ₇ de cette tringle avant montage sont respectivement de 331 mm et 323 mm. Les valeurs de ces diamètres après montage sur la jante 8 sont de 337,6 mm et 329,6 mm. L'augmentation du diamètre Dᵢ₇ après montage sur la jante 8 est donc de 2 %. L'allongement élastique maximal de cette tringle secondaire est de 4 %.
- Jante 8
   Cette jante correspond à la dénomination 5J13 de la European Tyre and Rim Technical Organization (ETRTO). La valeur du diamètre D₉ est de 330,08 mm et le diamètre au seat (symbole D_{H} de l'ETRTO) est de 328,07 mm.

On réalise d'autre part une enveloppe témoin non conforme à l'invention. Cette enveloppe est identique à l'enveloppe conforme à l'invention, avec la différence qu'elle ne comporte pas de tringle secondaire 7. Ces deux enveloppes ont la même géométrie extérieure, et donc la valeur du diamètre Dᵢ₃ est la même pour les deux enveloppes, le diamètre Dᵢ₃ de l'enveloppe témoin étant mesuré au même endroit de l'enveloppe que pour l'enveloppe conforme à l'invention. Ce diamètre Dᵢ₃, avant montage sur la jante 8, est égal à 321 mm et il est inférieur au diamètre Dᵢ₃ d'une enveloppe classique de même dimension (325.3 mm), ce qui permet de comparer des enveloppes de dimensions identiques, ces deux enveloppes subissant donc sur la jante un serrage plus marqué qu'une enveloppe classique de cette dimension.

On monte ces enveloppes sur la même jante 8. On constate alors que les pressions sont les suivantes pour permettre le montage des enveloppes
- enveloppe conforme à l'invention : 4,4 bars pour le franchissement du hump côté extérieur véhicule ;
- enveloppe non conforme à l'invention : 2,6 bars pour le franchissement du hump côté extérieur véhicule.

On fixe ces jantes montées sur un véhicule et on les fait rouler à 50 km/h sur un rayon de 20 m en diminuant la pression jusqu'à l'apparition d'un décoincement. On constate que la pression de décoincement est de 0 bar pour l'enveloppe conforme à l'invention, alors qu'elle est de 1 bar pour l'enveloppe témoin. L'enveloppe conforme à l'invention ne subit donc un décoincement que dans un cas extrême de dégonflement lorsqu'il n'y a plus de pression dans l'enveloppe, alors que l'enveloppe non conforme à l'invention subit un décoincement bien avant, alors qu'il subsiste une pression notable dans l'enveloppe et ceci malgré un serrage plus important que dans une enveloppe classique, comme noté plus haut. L'invention permet donc de retarder très notablement l'apparition d'un décoincement et donc de retarder très notablement le phénomène de déjantage, ce qui améliore considérablement la sécurité de cette enveloppe, au prix d'un léger inconvénient qui est la pression plus élevée pour le montage de l'enveloppe conforme à l'invention.

La figure 3 représente un autre mode de réalisation de l'invention. Sur cette figure, le bourrelet 3' de cette enveloppe 10' est identique au bourrelet 3 de l'enveloppe 10 à la différence que le bourrelet 3' présente une zone 60, sous la tringle principale 6, dont le diamètre moyen D₆₀ avant montage sur la jante 8 est supérieur au diamètre Dᵢ₃ avant montage et correspond pratiquement au diamètre d'une enveloppe classique mesuré au même endroit sur l'enveloppe. Cette réalisation a pour intérêt d'avoir une pression de gonflage pour le passage du hump qui se rapproche de cette pression pour une enveloppe classique, tout en lui étant cependant supérieure, ce qui peut faciliter le montage par rapport à l'enveloppe 10 qui ne comporte pas cette zone 60.

Pour la simplification du dessin les indices sont les mêmes sur les figures 2 et 3, pour les mêmes éléments.

Bien entendu, l'invention n'est pas limitée aux exemples de réalisation précités.

## Revendications

1. Enveloppe (10) de pneumatique utilisable sur jante (8) avec hump (9), comportant un sommet (1), deux flancs (2) et deux bourrelets (3) avec au moins une nappe carcasse (5) s'étendant d'un bourrelet à l'autre et dont chaque bourrelet présente les points suivants
a) il comporte une tringle principale (6) autour de laquelle s'enroule la nappe carcasse et une tringle secondaire (7) disposée en-dehors de la nappe carcasse ;
b) le diamètre intérieur de la tringle principale (Di6) après montage sur la jante est supérieur au diamètre (D9) du sommet (90) du hump ; le diamètre intérieur de la tringle principale avant montage sur la jante est pratiquement le même qu'après montage sur la jante et l'allongement élastique maximal de la tringle principale est au plus égal à 1,5 % ;
c) avant montage sur la jante, le diamètre extérieur de la tringle secondaire (De7) est inférieur au diamètre intérieur de la tringle principale (Di6); **caractérisée en ce qu'** après montage sur la jante, le diamètre intérieur de la tringle secondaire (Di7) est inférieur au diamètre (D9) du sommet du hump ; le diamètre intérieur de la tringle secondaire après montage sur la jante est supérieur de 1,5 à 3 % au diamètre intérieur de la tringle secondaire avant montage sur la jante et l'allongement élastique maximal de la tringle secondaire est d'au moins 3 %.

2. Enveloppe de pneumatique selon la revendication 1, **caractérisée en ce que** l'allongement élastique maximal de la tringle secondaire est au moins égal à 4 %.

3. Enveloppe de pneumatique selon l'une quelconque des revendications 1 ou 2, **caractérisée en ce que** la tringle secondaire est réalisée en enroulant des spires d'un fil de renfort.

4. Enveloppe de pneumatique selon l'une quelconque des revendications 1 à 3, **caractérisée en ce que** le bourrelet de l'enveloppe présente une zone, sous la tringle principale, dont le diamètre moyen, avant montage sur la jante, est supérieur au diamètre de l'enveloppe sous l'axe de la tringle secondaire, avant montage sur la jante.

## Patentansprüche

1. Reifenmantel (10), der auf einer Felge (8) mit Hump (Buckel) (9) benutzbar ist und der einen Scheitel (1), zwei Flanken (2) und zwei Wülste (3) aufweist, mit mindestens einer Karkassenlage (5), die sich von einem Wulst zum anderen erstreckt, und bei dem jeder Wulst die folgenden Punkte aufweist:
a) er weist einen Hauptwulstkern (6) auf, um den sich die Karkassenlage herumlegt, und einen Nebenwulstkern (7), der außerhalb der Karkassenlage angeordnet ist;
b) der Innendurchmesser (Di6) des Hauptwulstkerns nach der Montage auf der Felge ist größer als der Durchmesser (D9) des Scheitels (90) des Hump; wobei der Innendurchmesser des Hauptwulstkerns vor der Montage auf der Felge praktisch der selbe wie nach der Montage auf der Felge ist und die maximale Dehnung des Hauptwulstkerns höchstens 1,5% beträgt; und
c) vor der Montage auf der Felge ist der Außendurchmesser (De7) des Nebenwulstkerns kleiner als der Innendurcmesser (Di6) des Hauptwulstkerns; **dadurch gekennzeichnet, daß** nach der Montage auf der Felge der Innendurchmesser (Di7) des Nebenwulstkerns kleiner ist als der Scheiteldurchmesser (D9) des Hump; und daß der Innendurchmesser des Nebenwulstkerns nach der Montage auf der Felge um 1,5 bis 3% größer ist als der Innendurchmesser des Nebenwulstkerns vor der Montage auf der Felge und die maximale, elastische Dehnung des Nebenwulstkerns mindestens 3% beträgt.

2. Reifenmantel nach Anspruch 1, **dadurch gekennzeichnet, daß** die maximale, elastische Dehnung des Nebenwulstkerns mindestens 4% beträgt.

3. Reifenmantel nach irgendeinem der Ansprüche 1 oder 2, **dadurch gekennzeichnet, daß** der Nebenwulstkern dadurch hergestellt ist, daß man Spiralen eines Verstärkungsdrahtes aufwickelt.

4. Reifenmantel nach irgendeinem der Ansprüche 1 bis 3, **dadurch gekennzeichnet, daß** der Wulst des Mantels eine Zone unter dem Hauptwulstkern aufweist, deren mittlerer Durchmesser vor der Montage auf der Felge größer ist als der Durchmesser des Mantels unter der Achse des Nebenwulstkernes vor der Montage auf der Felge.

## Claims

1. A tyre (10) which can be used on a rim (8) with a hump (9), comprising a crown (1), two sidewalls (2) and two beads (3), with at least one carcass ply (5) extending from one bead to the other, and each bead of which has the following features:
a) it comprises a main bead wire (6) around which is wound the carcass ply and a secondary bead wire (7) arranged outside the carcass ply;
b) the internal diameter (Dᵢ₆) of the main bead wire after mounting on the rim is greater than the diameter (D9) of the apex (90) of the hump; the internal diameter of the main bead wire before mounting on the rim is practically the same as after mounting on the rim and the maximum elastic elongation of the main bead wire is at most 1.5%;
c) before mounting on the rim, the outer diameter (Dₑ₇) of the secondary bead wire is less than the internal diameter (Dᵢ₆) of the main bead wire, **characterised in that**, after mounting on the rim, the internal diameter of the secondary bead wire (Dᵢ₇) is less than the diameter (D₉) of the apex of the hump; the internal diameter of the secondary bead wire after mounting on the rim is greater by 1.5 to 3% than the internal diameter of the secondary bead wire before mounting on the rim and the maximum elastic elongation of the secondary bead wire is at least 3%.

2. A tyre according to Claim 1, **characterised in that** the maximum elastic elongation of the secondary bead wire is at least 4%.

3. A tyre according to any one of Claims 1 or 2, **characterised in that** the secondary bead wire is formed by winding turns of a reinforcement cord.

4. A tyre according to any one of Claims 1 to 3, **characterised in that** the bead of the tyre has a zone, beneath the main bead wire, the average diameter of which, before mounting on the rim, is greater than the diameter of the tyre beneath the axis of the secondary bead wire, before mounting on the rim.
